**Europäisches Patentamt**

**European Patent Office**

**Office européen des brevets**

(19)

(11) Veröffentlichungsnummer : **0 174 417**
**B1**

(12) # EUROPÄISCHE PATENTSCHRIFT

(45) Veröffentlichungstag der Patentschrift :
**25.05.88**

(51) Int. Cl.⁴ : **G 01 N   1/22**

(21) Anmeldenummer : **84890240.9**

(22) Anmeldetag : **12.12.84**

(54) Sondenvorrichtung zur Entnahme von flüchtigen Komponenten aus Flüssigkeiten oder Gasen.

(43) Veröffentlichungstag der Anmeldung :
**19.03.86 Patentblatt 86/12**

(45) Bekanntmachung des Hinweises auf die Patenterteilung : **25.05.88 Patentblatt 88/21**

(84) Benannte Vertragsstaaten :
**AT BE CH DE FR GB IT LI LU NL SE**

(56) Entgegenhaltungen :
**EP-A- 0 054 537**
**DE-A- 2 310 264**
**FR-A- 1 573 147**

(73) Patentinhaber : **Kempe, Eberhard Dipl.Ing.**
**Nr. 8**
**A-2112 Hetzmannsdorf (AT)**

(72) Erfinder : **Kempe, Eberhard Dipl.Ing.**
**Nr. 8**
**A-2112 Hetzmannsdorf (AT)**

(74) Vertreter : **Weinzinger, Arnulf, Dipl.-Ing.**
**Patentanwälte Dipl.-Ing. Helmut Sonn Dr. Heinrich Pawloy Dipl.-Ing. Arnulf Weinzinger Riemergasse 14**
**A-1010 Wien (AT)**

**Beschreibung**

Die Erfindung betrifft eine Sondenvorrichtung zur Entnahme von flüchtigen Komponenten aus Flüssigkeiten oder Gasen, beispielsweise zwecks Konzentrationsbestimmung, mit einem aus im wesentlichen rohrförmigen, koaxialen, ineinander gesteckten Bauteilen aufgebauten Sondenkörper und einer einen außenseitigen, z. B. schraubenlinienförmig verlaufenden Permeationskanal für ein die jeweilige flüchtige Komponente aufnehmendes Trägermedium abdeckenden schlauchförmigen Permeationsmembran, wobei ein Trägermedium-Zuführkanal zum Permeationskanal zwischen zwei im wesentlichen rohrförmigen Bauteilen und eine Trägermedium-Rückführleitung vom Permeationskanal im Inneren des Sondenkörpers vorgesehen sind und der Sondenkörper innen einen Aufnachmeraum aufweist, in den ein Sensor einsetzbar oder eingesetzt ist.

Eine derartige Einrichtung ist aus der EP-A1-54537 bekannt. Die in dieser Druckschrift beschriebene Vorrichtung ist zur Messung von flüchtigen Bestandteilen eines Kulturmediums der Fermentationsindustrie bestimmt, und sie weist einen Sondenkörper auf, der aus drei ineinander gesteckten, im wesentlichen rohrförmigen Bauteilen aufgebaut ist, wobei an der vorderen Stirnseite dieser Anordnung ein die Permeationsmembran tragender, an seiner Außenseite den durch Gewindenuten gebildeten Permeationskanal aufweisender fingerartiger Stift vorgesehen ist. Im Inneren des Sondenkörpers ist ein mit Meßleitungen verbundener Sensor angeordnet, dem das die einpermeierten Komponenten mit sich führende Trägermedium über eine axiale Sackbohrung im Stift zugeleitet wird. Von Nachteil ist bei dieser bekannten Sondenvorrichtung vor allem der komplexe Aufbau aus einer verhältnismäßig großen Anzahl von Einzelteilen, wobei es hierbei auch problematisch ist, die verschiedenen Einzelteile mit genauer Passung herzustellen und miteinander zu verbinden. So ist beispielsweise zur Befestigung des die Permeationsmembran tragenden Stiftes am eigentlichen Sondenkörper ein Abdrehvorgang sowie das Einschneiden eines Gewindes mit außerordentlich genauer Passung notwendig. Auch bringt die bekannte Konstruktion zufolge der verschiedenen miteinander zu verbindenden Bauteile Abdichtungsprobleme mit sich, wobei sich auch Schwierigkeiten dadurch ergeben, daß die rohrförmigen Bauteile zufolge ihrer Anzahl eine möglichst geringe Wandstärke aufweisen sollten, damit der Gesamtdurchmesser der Sondenvorrichtung nicht zu groß wird. Dies bringt in der Folge auch mit sich, daß zur dichten Befestigung der Sondenvorrichtung in einer Wandöffnung eines Fermentationsbehälters eigens konstruierte Befestigungsflansche notwendig sind, die in ihrer Innenwandung mit einer O-Ring-Dichtung versehen sind, d. h. es können bei der bekannten Sondenvorrichtung keine herkömmlichen Standard-Befestigungsstutzen — die ohne Dichtungen ausgeführt sind — verwendet werden.

Ein weiterer Nachteil der bekannten Sondenvorrichtung ist darin gelegen, daß die Permeationsmembran beim Einsetzen leicht beschädigt werden kann, etwa wenn beim Einsetzen mit dem die Permeationsmembran tragenden Stift am Befestigungsflansch oder -stutzen angestreift wird. Schließlich ist es auch schwierig, wenn nicht unmöglich, die Austauschfläche am Stift zur Anpassung an verschiedene Konzentrationen der zu messenden Komponenten zu ändern, wobei es auch problematisch ist, bei der Notwendigkeit von großen Austauschflächen und damit langen Stiften entsprechend lange bzw. tiefe axiale Sackbohrungen im Stift — der üblicherweise aus Edelmetall besteht — anzubringen.

Die mehrteilige Konstruktion der bekannten Sondenvorrichtung wurde ersichtlich deshalb als notwendig angesehen, um den erwähnten Sensor direkt im Inneren des Sondenkörpers unterbringen zu können und so die Lange des Trägermediumkanals vom Permeationskanal bis zum Sensor kurz zu gestalten. Wenn nämlich kein Sensor in Inneren einer Sonde unterzubringen ist, kann ein einfacher zylinderförmiger Stift oder Stab vorgesehen werden, der an seiner Außenseite die schraubenlinienförmigen Nuten als Permeationskanal aufweist, der mit achsparallelen, als Trägermedium-Zuleitungen bzw. -Ableitungen dienenden Bohrungen verbunden ist, wobei auf diesem Stab oder Stift die schlauchförmige Permeationsmembran aufgezogen ist, vgl. beispielsweise die DE-OS 2 310 264. Diese bekannte Sondenvorrichtung hat jedoch — ähnlich wie die aus der FR-PS 1 573 147 bekannten Vorrichtungen — den Nachteil, daß das Trägermedium mit den einpermeierten Substanzen über eine Kapillarleitung dem in einem externem Meß- oder Analysegerät angeordneten Sensor zugeführt werden muß, was beispielsweise aufgrund von Temperaturschwankungen nachteilig ist, wie in der genannten EP-A1-54537 erläutert ist.

Der Erfindung liegt daher die Aufgabe zugrunde, eine Sondenvorrichtung der eingangs angegebenen Art zu schaffen, die universell anwendbar ist und insbesondere ebenfalls den Einbau eines Sensors unmittelbar im Sondenkörper ermöglicht, die aber eine vereinfachte Konstruktion besitzt, bei der die einzelnen Bauteile einfacher herstellbar und dabei insbesondere weniger kritisch bezüglich Fertigungstoleranzen sind, ferner der Zusammenbau der Bauteile vereinfacht ist, und bei der überdies die Verwendung von Standard-Befestigungssockeln für die Anbringung der Sondenvorrichtung in einer Wandöffnung eines Fermentationsbehälters od. dgl. möglich ist und schließlich auch eine einfache Möglichkeit dafür besteht, die Permeationsmembran beim Ein- oder Ausbau wirkungsvoll zu schützen.

Erfindungsgemäß wird diese Aufgabe bei der Sondenvorrichtung der eingangs erwähnten Art dadurch gelöst, daß der Sondenkörper aus bloß zwei im wesentlichen rohrförmigen Bauteilen, einem Innenbauteil und einem an der vorderen Stirnseite abgeschlossenen Außenbauteil, aufgebaut ist und der Außenbauteil im der vorderen Stirnseite benachbarten vorderen Bereich in seiner Außenfläche den Permeationskanal aufweist, der einerseits über eine hintere Querbohrung im Außenbauteil mit dem Trägermedium-Zuführkanal zwischen den beiden Bauteilen und andererseits über eine vordere Bohrung im Außenteil nahe dessen vorderer Stirnseite mit der Trägermedium-Rückführleitung in Verbindung steht. Bei der vorliegenden Sondenvorrichtung ist somit der Sondenkörper, d. h. die eigentliche Sonde, aus im wesentlichen bloß zwei Bauteilen (anstatt vier, wie bei der bekannten gattungsgemäßen Sondenvorrichtung) aufgebaut, was die Herstellung und Montage wesentlich vereinfacht und verbilligt. Als besonders vorteilhaft hat sich dabei erwiesen, daß der Permeationskanal direkt am Außenbauteil selbst — anstatt an einem gesonderen Stift oder Stab — vorgesehen ist, wobei vor allem durch diese Maßnahme das Vorsehen von bloß zwei rohrförmigen Bauteilen (anstatt von drei Rohrteilen) zumindest begünstigt wird, da die bei der bekannten Sondenvorrichtung erforderlichen Maßnahmen zur Befestigung des gesonderten Stiftes wegfallen. Dadurch, daß bloß zwei Rohr-Bauteile vorhanden sind, kann auch die Wandstärke dieser Rohr-Bauteile größer als bei der bekannten Sondenvorrichtung gewählt werden, was auch aus Gründen einer erhöhten Festigkeit günstig ist.

Der Vollständigkeit halber sei hier noch erwähnt, daß aus der CH-PS 457 912 eine Sonde zur Bestimmung von in Flüssigkeiten gelösten Gasen bekannt ist, bei der innerhalb eines rohrförmigen Gehäuses ein rohrförmiger Fühlerkörper angebracht ist, an dessen vorderer Stirnseite innen eine Kathode aus Edelmetall befestigt ist, und in dessen Innerem Meßleitungen vorgesehen sind. Das Gehäuse ist an der vorderen Stirnseite mit einer gasdurchlässigen Membran abgeschlossen, und der Fühlerkörper ist ferner in seinem vorderen Bereich abgedreht und von einer Anode aus Silber umgeben. Zur kontinuierlichen Kompensation von Druckänderungen ist dabei der innere Fühlerkörper von einer Schraubendruckfeder in Richtung Membran belastet. Dadurch ist der innere Fühlerkörper relativ zum äußeren Gehäuse axial verschiebbar. Diese bekannte Sonde gehört somit einer anderen Art von Sonden an, bei der die zu messenden Komponenten durch die Membran hindurch direkt zu den Meßelektroden gelangen, d. h. es ist kein Permeationskanal mit entsprechenden Trägermedium-Zuführ- bzw. -abführleitungen vorgesehen. Demgemäß ist die bekannte Sonde auch in ihren Anwendungsmöglichkeiten eher beschänkt, wogegen bei der hier in Rede stehenden Art von den Sondenvorrichtungen eine große Anzahl von Anwendungsmöglichkeiten offensteht und hiefür primär nur das jeweilige Trägermedium entsprechend zu wählen ist.

Um die Herstellung der erfindungsgemäßen Sondenvorrichtung weiter zu vereinfachen und insbesondere schwierigere Bearbeitungsvorgänge durch Ausdrehen od. dgl. zu vermeiden, ist es auch von Vorteil, wenn der Außenbauteil an seiner vorderen Stirnseite durch ein stopfenartiges Abschlußstück abgeschlossen ist.

Um das Trägermedium vom in Außenbauteil vorhandenen Permeationskanal zum Aufnahmeraum im Inneren des Sondenkörpers und damit beispielsweise zu einem Halbleiter-Sensor zuzuführen, kann an sich im Abschlußstück ein schräger oder winkelförmiger Kanal vorgesehen werden. Ein solcher Kanal für das Trägermedium kann jedoch auf besonders einfache Weise erhalten werden, wenn zur Rückführung des Trägermediums im Abschlußstück eine mit der vorderen Querbohrung im Außenbauteil fluchtende Querbohrung und eine dazu ausgerichtete axiale Sackbohrung vorgesehen sind.

Wie bereits erwähnt, können bei der erfindungsgemäßen Sondenvorrichtung die beiden rohrförmigen Bauteile eine vergleichsweise größere Wandstärke aufweisen, und dies bringt auch in vorteilhafter Weise die Möglichkeit mit sich, im Außenbauteil im Bereich der Befestigung des Sondenkörpers in einem Gehäuse, Stutzen od. dgl. eine periphere Dichtung, wie einen O-Ring, vorzusehen. Dadurch kann die Sondenvorrichtung einfach unter Verwendung handelsüblicher Standard-Befestigungsstutzen angebracht werden, wobei die erforderliche Dichtungseinrichtung bereits am Sondenkörper selbst vorhanden ist. Es erübrigt sich somit das Vorsehen von speziellen Befestigungsstutzen mit an ihrer Innenwandung angebrachten Dichtungen.

Vorteilhafterweise ist der Aufnahmeraum für den Sensor oder aber für einen mit einem externen Meßgerät verbundenen Adapter zwischen der Rückseite des Abschlußstückes und der vorderen Stirnseite des Innenbauteiles vorgesehen.

Um die Permeationsmembran, die auf den vorderen Abschnitt oder Bereich des Außenbauteiles aufgezogen ist, beim Einbau oder Ausbau der Sondenvorrichtung auf möglichst einfache und zweckmäßige Weise zu schützen, ist es weiters günstig, wenn der Außenbauteil eine seinen vorderen Bereich, im dem die Permeationsmembran angebracht ist, mit Abstand umgebende, koaxiale Schutzhülse trägt. Die Anbringung dieser Schutzhülse ist dabei völlig unproblematisch, wobei insbesondere auch nicht die Einhaltung extrem enger Fertigungstoleranzen erforderlich ist, andererseits der Außenbauteil eine ausreichende Dicke aufweist, um die Schutzhülse fest und sicher tragen zu können.

Von besonderem Vorteil ist es hier für die Befestigung der Schutzhülze, wenn die Schutzhülse mit ihrem hinteren Ende auf einen abgesetzten Gewindeabschnitt des Außenbauteils aufgeschraubt ist.

Die Schutzhülse ist an der vorderen Stirnseite offen, sodaß der zwischen ihr und der Permeationsmembran an der Außenseite des Außenbauteiles gebildete Ringkanal von der Stirnseite her für das jeweilige Gas oder die jeweilige Flüssigkeit frei zugänglich ist. Um das Umströmen der Permeationsmembran jedoch zusätzlich zu begünstigen, ist es weiters vorteilhaft, wenn die Schutzhülse durchlocht ist.

Im Hinblick auf einen reibungslosen, glatten Ablauf beim Einbau oder Ausbau der Sondenvorrichtung ist es von zusätzlichem Vorteil, wenn die Außenseite der Schutzhülse mit der Außenseite des Außenbauteiles in dessen anschließendem Bereich der Befestigung in einem Gehäuse, Stutzen od. dgl. fluchtet. Auf diese Weise wird durch die Mantelfläche der Schutzhülse eine Führung der Sondenvorrichtung beim Einbau bzw. Ausbau gewährleistet.

An sich könnte sich der Permeationskanal in der Außenfläche des Außenbauteiles so weit nach hinten erstrecken, daß er über die hintere Querbohrung mit dem Trägermedium-Zuführkanal zwischen den beiden Bauteilen direkt verbunden werden könnte. (Es sei hier erwähnt, daß selbstverständlich die beiden rohrförmigen Bauteile beispielsweise durch zwei in Abstand voneinander vorgesehene O-Ring-Dichtungen gegeneinander abgedichtet sind, um so den insbesondere ringförmigen Trägermedium-Zuführkanal zwischen ihnen abzudichten.) Für viele Anwendungen ist es jedoch zweckmäßig bzw. notwendig, den Permeationskanal kürzer vorzusehen, wobei die Länge des Permeationskanals bzw. die Größe der Austauschfläche abhängig von der Konzentration der zu messenden flüchtigen Komponenten gewählt wird. Um nun in universeller Weise Standard-Bauteile für die verschiedensten Anwendungszwecke vorsehen zu können, ist es von Vorteil, wenn der schraubenlinienförmige Permeationskanal an einen sich in der Außenfläche des Außenbauteiles axial erstreckenden, mit der hinteren Querbohrung in Verbindung stehenden, nutförmigen Führungskanal anschließt. Der nutförmige Führungskanal erstreckt sich dabei zweckmäßigerweise gerade, d. h. achsparallel, von der hinteren Querbohrung zum den Permeationskanal definierenden « Gewindeabschnitt », d. h. zu jenem Bereich, in dem der in Form von Gewindegängen ausgebildete Permeationskanal vorgesehen ist. Bei dieser Ausbildung werden je nach Konzentration der zu messenden flüchtigen Komponenten einfach mehr oder weniger Gewindegänge in den vorderen Bereich des Außenbauteiles eingeschnitten, um so die Austauschfläche an die Konzentration anzupassen, und je nachdem wird ein kürzerer oder längerer nutförmiger Führungskanal zur Verbindung mit der hinteren Querbohrung vorgesehen.

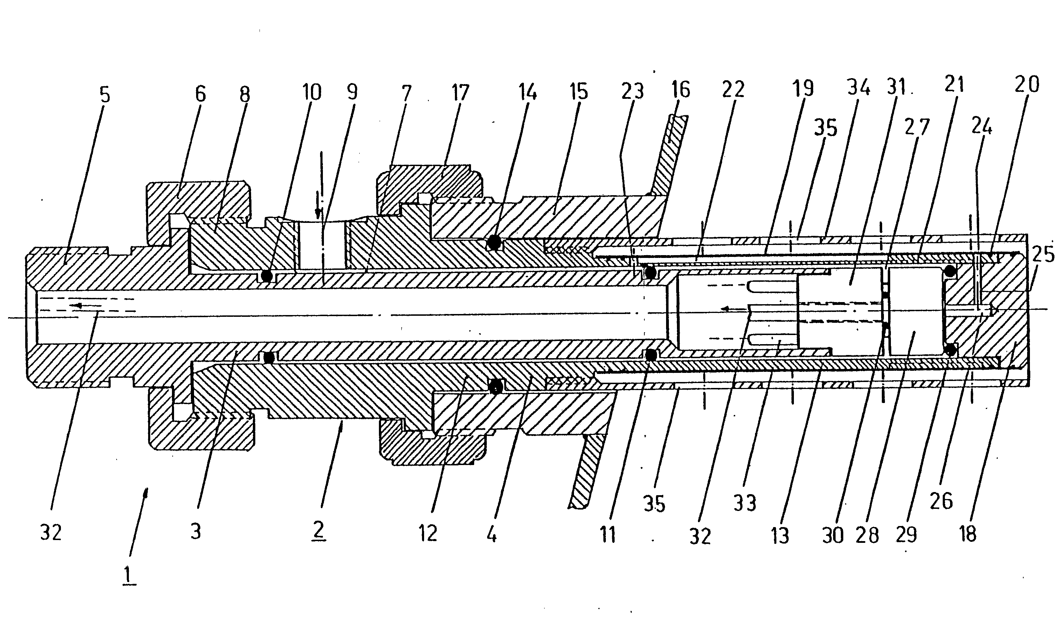

Die Erfindung wird nachstehend anhand eines in der Zeichnung dargestellten Ausführungsbeispieles noch weiter erläutert. Dabei zeigt die Zeichnung einen axialen Längsschnitt durch eine besonders bevorzugte Ausführungsform einer Sondenvorrichtung.

Die in der Zeichnung allgemein mit 1 bezeichnete Sondenvorrichtung weist einen Sondenkörper 2 auf, der im wesentlichen aus einem ungefähr rohrförmigen Innenbauteil 3 und einem koaxial zu diesem angeordneten, ebenfalls im wesentlichen rohrförmigen Außenbauteil 4 besteht. Der rohrförmige Innenbauteil 3, nachstehend auch einfach Innenrohrteil 3 genannt, besitzt an seinem hinteren Ende 5 ein Standard-Gewinde zum Aufschrauben eines Standard-Anschlußkopfes (nicht dargestellt), und dieses verdickte Ende 5 liegt mit seiner in der Zeichnung rechten Vorderseite oder Schulter an der Rückseite des im wesentlichen rohrförmigen Außenbauteiles 4, nachstehend kurz Außenrohrteil genannt, an, wobei eine Verbindung zwischen den beiden Rohrteilen 3, 4 in deisem Bereich mit Hilfe einer überwurfmutter 6 in herkömmlicher Weise bewerkstelligt ist.

Der Innendurchmesser des Außenrohrteiles 4 ist etwas größer bemessen als der Außendurchmesser des Innenrohrteiles 3 im an den Anschlußkopf 5 anschließenden Bereich, wodurch zwischen den beiden Bauteilen 3, 4 ein ringförmiger Zuführkanal 7 gebildet ist, in den ein Trägermedium (Trägergas) über einen im hinteren, verdickten Bereich 8 des Außenrohrteiles 4 vorgesehenen, radialen Anschlußstutzen 9 zugeführt werden kann. Um ein ungewolltes Ausströmen des Trägermediums aus dem Zuführkanal 7 zu verhindern, sind zwischen den beiden Bauteilen 3, 4 in axialem Abstand voneinander zwei O-Ring-Dichtungen 10, 11 vorgesehen, die in entsprechenden Umfangsnuten des Innenrohrteiles 3 angeordnet sind.

An den verdickten hinteren Bereich 8 des Außenrohrteiles 4 schließt nach vorne ein Befestigungsbereich 12 mit einem Außendurchmesser an, der kleiner ist als jener des hinteren, verdickten Bereiches 8, jedoch größer als jener des vorderen Bereiches 13 des Außenrohrteiles 4, mit dem der Sondenkörper 2 in den jeweiligen Flüssigkeits- oder Gasraum ragt, in dem die jeweiligen flüchtigen Komponenten z. B. hinsichtlich ihrer Konzentration zu erfassen sind. Im genannten Befestigungsbereich 12 trägt der Außenrohrteil 4 eine in einer Umfangsnut angeordnete O-Ring-Dichtung 14, die im eingebauten Zustand der Sondenvorrichtung 1 zur Abdichtung gegen einen Standard-Befestigungsstrutzen 15 (sog. « Ingold »-Stutzen) dient, der an einer Wand 16 des den jeweiligen Flüssigkeits- oder Gasraum enthaltenden Behälters befestigt, beispielsweise angeschweißt, ist. Zur Fixierung der Sondenvorrichtung 1 am Befestigungsstutzen 15 dient in an sich herkömmlicher Weise eine weitere überwurfmutter 17.

An seiner vorderen, gemäß der Darstellung in der Zeichnung rechten Stirnseite ist der Außenrohrteil 4 mit Hilfe eines stopfenartigen Abschlußstückes 18 abgeschlossen. Dieses Abschlußstück 18 ist beispeilsweise eingeklebt oder eingeschweißt, und es ist, wie aus der Zeichnung ersichtlich ist, abgestuft ausgebildet und schließt dabei insbesondere mit seinem vorderen Abschnitt bündig mit der Außenfläche des Außenrohrteiles 4 ab. über dem vorderen Bereich 13 des Außenrohrteiles 4 und dem Abschlußstück 18 ist eine schlauchförmige Permeationsmembran 19 angebracht, die beispielsweise durch einen Silikonschlauch mit kleinerem Durchmesser als der Außendurchmesser des Außenrohrteiles 4 im vorderen Bereich 13 gebildet ist und unter Bildung von ringförmigen Wulstbereichen in Umfangsnuten des Außenrohrteiles 4 bzw. Abschlußstückes 18 beim Aufziehen auf den Außenrohrteil 4 fixiert ist, wie bei 20 angedeutet ist. Die Permeationsmembran 19 bedeckt einen in der Zeichnung schematisch als Gewinde eingezeichneten, schraubenlinienförmig verlaufenden Permeationskanal 21, der an einen durch eine Nut gebildeten, achsparallelen Trägermedium-Führungskanal 22 anschließt, welcher ebenfalls von der Permeationsmembran 19 bedeckt ist. Je nach Konzentration der zu messenden Komponenten im Flüssigkeits- oder Gasraum wird zwecks Anpassung der Austauschfläche das den Permeationskanal 21 bildende Gewinde mit größerer oder kleinerer Länge in die Außenfläche des vorderen Bereiches des Außenrohrteiles 4 eingeschnitten, und dementsprechen ist der Führungskanal 22 kürzer oder länger ausgebildet. Am hinteren Ende ist der Führungskanal 22 über eine hintere Querbohrung 23 mit dem ringförmigen Trägermedium-Zuführkanal 7 verbunden, und der Permeationskanal 21 ist weiters über eine vordere Querbohrung 24 im Außenrohrteil 4 mit einer damit fluchtenden Querbohrung 25 im Abschlußstück 18 verbunden, die in eine axiale Sackbohrung 26 im Abschlußstück 18 einmündet. Dieser Sackbohrung 26 gegenüber liegt ein in einem Aufnahmeraum 27 zwischen der Rückseite des Abschlußstückes 18 und der vorderen Stirnseite des Innenrohrteiles 3 angebrachter Gas-Halbleiter-Sensor 28, wobei zwischen diesem Sensor 28 und dem Abschlußstück 18 eine weitere O-Ring-Dichtung 29 vorgesehen ist. Dadurch erhält der Sensor 28 das mit den zu messenden einpermeierten flüchtigen Komponenten versehene Trägermedium auf kürzestem Weg zugeleitet.

Hinter dem Sensor 28 befindet sich, unter Abdichtung mittels eines weiteren O-Ringes 30, ein herkömmlicher Anschlußblock oder Sockel 31, insbesondere aus Kunststoff, der eine zentrale Axialbohrung für die Aufnahme einer nur ganz schematisch eingezeichneten Trägermedium-Rückführleitung 32 aufweist. Diese Trägermedium-Rückführleitung 32 erstreckt sich durch den axialen Hohlraum innerhalb des Innenrohrteiles 3 zum hinteren Ende 5 hin und durch dieses hindurch. In ähnlicher Weise verlaufen durch den axialen Innenraum des Innenrohrteiles 3 vom Anschlußblock 31 abgehende, ebenfalls nur schematisch eingezeichnete Meßleitungen 33.

Sofern in Aufnahmeraum 27 nicht unmittelbar ein Sensor 28 angeordnet werden soll, kann anstattdessen, ohne daß der Sondenkörper 2 im übrigen verändert werden müßte, ein Adapter eingesetzt werden, der in den Aufnahmeraum 27 paßt und das mit den zu messenden flüchtigen Komponenten gesättigte Trägermedium in eine Trägermediumleitung ähnlich der Leitung 32 einführt, die zu einem externen Meß- oder Analysegerät führt, das einen entsprechenden Sensor oder Detektor enthält. Dies kann beispielsweise dann der Fall sein, wenn schwierige Meßvorgänge durchzuführen sind, für die ein geeigneter kleiner, im Aufnahmeraum 27 einsetzbarer Halbleitersensor od. dgl. nicht zur Verfügung steht.

Der vordere, die Permeationsmembran 19 tragende Bereich 13 des Außenrohrteiles 4 ist mit Abstand von einer Schutzhülse 34 umgeben, die in ihrem hinteren Bereich ein Innengewinde aufweist und mit diesem Gewindeabschnitt auf einem abgesetzten Gewindeabschnitt im Befestigungsbereich 12 des Außenrohrteiles 4 aufgeschraubt ist, und zwar derart, daß eine Fluchtung zwischen der Außenseite der Schutzhülse 34 und der Außenseite des Außenrohrteiles 4 im genannten Befestigungsbereich 12 gewährleistet ist. Dadurch wird nicht nur die Ausbildung des Befestigungsstutzens 15 mit glatter Innenbohrung bzw. die Verwendung von Standard-Befestigungsstutzen ermöglicht, sondern auch ein problemloses, glattes Einsetzen des Sondenkörpers 2 beim Einbau gewährleistet. Beim Einbau wie auch beim Ausbau schützt die Schutzhülse 34 die Permeationsmembran 19, d. h. sie schirmt sie derart ab, daß ein Anstreifen und eine damit einhergehende Beschädigung sicher vermieden wird. Beim dargestellten Ausführungsbeispiel liegt die vordere Stirnseite der Schutzhülse 34 in einer Ebene mit der Vorderseite des Abschlußstückes 18, es wäre jedoch selbstverständlich auch denkbar, die Schutzhülse 34 über das Abschlußstück 18 etwas überstehen zu lassen. Das Gas oder die Flüssigkeit mit den zu messenden flüchtigen Komponenten kann im Ringraum zwischen der Schutzhülse 34 und der Permeationsmembran 19 strömen, und um die Umströmung der Permeationsmembran 19 zusätzlich zu fördern, kann die Schutzhülse 34 vielfach durchlocht oder perforiert sein, wie schematisch bei 35 angedeutet ist.

Im Betrieb taucht die Sonde in eine Flüssigkeit oder in einen Gasraum ein, und sie wird von einem Trägermedium (z. B. Luft oder Inertgas) mit definierter Durchflußmenge durchströmt. Die zu messenden flüchtigen Komponenten in der Flüssigkeit oder in Gasraum permeieren entsprechend ihrer Konzentration mit verschieden hohen Geschwindigkeiten durch die Permeationsmembran 19 und gelangen so in das Trägermedium. Das derart mit den flüchtigen Komponenten gesättigte Trägermedium trifft sodann auf den Sensor 28, welcher seine elektrischen Eigenschaften, wie dies an sich bekannt ist, in Abhängigkeit von der Konzentration der zu messenden Komponenten bzw. Verbindungen ändert. Diese Änderungen der elektrischen Eigenschaften des Sensors 28 werden über die Meßleitungen 33 zur weiteren Auswertung übermittelt.

Die beschriebene Sondenvorrichtung kann beispielsweise zur Messung und Registrierung aller in bio-technologischen Prozessen vorkommenden Parameter verwendet werden ; insbesondere können derartige flüchtige organische Verbindungen, wie Alkohole, Kohlenmonoxid, Methan, Propan, Ester, Ketone, Lösungsmittel etc., gemessen werden. Die beschriebene Sondenvorrichtung kann jedoch ganz allgemein zu Meßzwecken in chemischen Prozessen eingesetzt und insbesondere auch in Kraftfahrzeugwerkstätten bei der Messung der Abgase zur Bestimmung bestimmter umweltverschmutzender Substanzen verwendet werden. Sofern kein Sensor eingebaut ist, ist die Sondenvorrichtung wie erwähnt über den im Aufnahmeraum 27 aufzunehmenden Adapter an ein externes Meßgerät anzuschließen, wie etwa an einen Gaschromatographen, ein Massenspektrometer, ein UV-Spektrometer oder ein Atomadsorptionsspektrometer. Beispielsweise kann ein Sauerstoffanalysator als externes Meßgerät vorhanden sein, dem die zu messende Sauerstoffkomponente eines Gas- oder Flüssigkeitsraumes mit Hilfe eines Trägergases in Form von Stickstoff zugeführt wird.

Aus Vorstehendem ist ersichtlich, daß die beschriebene Sondenvorrichtung nicht nur außerordentlich universell einsetzbar ist, und zwar sowohl mit eingebautem Sensor als auch ohne Sensor, dafür mit einem entsprechenden Adapter, sondern daß trotz dieser universellen Anwendbarkeit die Konstruktion des Sondenkörpers außerordentlich einfach ist, da im wesentlichen nur zwei Bauteile, nämlich die Rohrteile 3, 4, vorhanden sind, sodaß sich keinerlei Probleme hinsichtlich Herstellung (mit engen Fertigungstoleranzen) und Montage wie bei der eingangs beschriebenen bekannten Sondenvorrichtung ergeben. Die Bauteile der beschriebenen Sondenvorrichtung bestehen beispielsweise aus Edelstahl, und sie können mit angemessenen Wandstärken und somit mit ausreichender Festigkeit derart ausgebildet werden, daß auch der Einbau der beschriebenen, gegenüber dem Befestigungsstutzen 15 abdichtenten O-Ring-Dichtung 14 am Sondenkörper selbst keinerlei Schwierigkeiten bereitet. Schließlich kann in vorteilhafter Weise bei der beschriebenen Konstruktion ein Schutz bzw. eine Abschirmung für die Permeationsmembran 19 durch das Anbringen der Schutzhülse 34 erzielt werden.

**Patentansprüche**

1. Sondenvorrichtung (1) zur Entnahme von flüchtigen Komponenten aus Flüssigkeiten oder Gasen, beispielsweise zwecks Konzentrationsbestimmung, mit einem aus im wesentlichen rohrförmigen, koaxialen, ineinander gesteckten Bauteilen (3, 4) aufgebauten Sondenkörper (2) und einer einen außenseitigen, z. B. schraubenlinienförmig verlaufenden Permeationskanal (21) für ein die jeweilige flüchtige Komponente aufnehmendes Trägermedium abdeckenden schlauchförmigen Permeationsmembran (19), wobei ein Trägermedium-Zuführkanal (7) zum Permeationskanal (21) zwischen zwei im wesentlichen rohrförmigen Bauteilen (3, 4) und eine Trägermedium-Rückführleitung (32) vom Permeationskanal (21) im Inneren des Sondenkörpers (2) vorgesehen sind und der Sondenkörper (2) innen einen Aufnahmeraum (27) aufweist, in den ein Sensor (28) einsetzbar oder eingesetzt ist, dadurch gekennzeichnet, daß der Sondenkörper (2) aus bloß zwei im wesentlichen rohrförmigen Bauteilen (3, 4), einem Innenbauteil (3) und einem an der vorderen Stirnseite abgeschlossenen Außenbauteil (4), aufgebaut ist und der Außenbauteil (4) im der vorderen Stirnseite benachbarten vorderen Bereich (14) in seiner Außenfläche den Permeationskanal (21) aufweist, der einerseits über eine hintere Querbohrung (24) im Außenbauteil (4) mit dem Trägermedium-Zuführkanal (7) zwischen den beiden Bauteilen (3, 4) und andererseits über eine vordere Bohrung (24) im Außenteil (4) nahe dessen vorderer Stirnseite mit der Trägermedium-Rückführleitung (32) in Verbindung steht.

2. Sondenvorrichtung nach Anspruch 1, dadurch gekennzeichnet, daß der Außenbauteil (4) an seiner vorderen Stirnseite durch ein stopfenartiges Abschlußstück (18) abgeschlossen ist.

3. Sondenvorrichtung nach Anspruch 2, dadurch gekennzeichnet, daß zur Rückführung des Trägermediums im Abschlußstück (18) eine mit der vorderen Querbohrung (24) im Außenbauteil (4) fluchtende Querbohrung (25) und eine dazu ausgerichtete axiale Sackbohrung (26) vorgesehen sind.

4. Sondenvorrichtung nach einem der Ansprüche 1 bis 3, dadurch gekennzeichnet, daß des Außenbauteil (4) im Bereich (12) der Befestigung des Sondenkörpers (2) in einem Gehäuse, Stutzen od. dgl. (15) eine periphere Dichtung (14), wie einen O-Ring, trägt.

5. Sondenvorrichtung nach einem der Ansprüche 2 bis 4, dadurch gekennzeichnet, daß zwischen der Rückseite des Abschlußstückes (18) und der vorderen Stirnseite des Innenbauteiles (3) der Aufnahmeraum (27) für den Sensor (28) oder einen mit einem externen Meßgerät verbundenen Adapter vorgesehen ist.

6. Sondenvorrichtung nach einem der Ansprüche 1 bis 4, dadurch gekennzeichnet, daß der Außenbauteil (4) eine seinen vorderen Bereich (13), in dem die Permeationsmembran (19) angebracht ist, mit Abstand umgebende, koaxiale Schutzhülse (34) trägt.

7. Sondenvorrichtung nach Anspruch 6, dadurch gekennzeichnet, daß die Schutzhülse (34) mit ihrem hinteren Ende auf einen abgesetzten Gewindeabschnitt des Außenbauteiles (4) aufgeschraubt ist.

8. Sondenvorrichtung nach Anspruch 6 oder 7, dadurch gekennzeichnet, daß die Schutzhülse (34) durchlocht ist.

9. Sondenvorrichtung nach einem der Ansprüche 6 bis 8, dadurch gekennzeichnet, daß die Außenseite der Schutzhülse (34) mit der Außenseite des Außenbauteiles (4) in dessen anschließendem Bereich (12) der Befestigung in einem Gehäuse, Stutzen od. dgl. (15) fluchtet.

10. Sondenvorrichtung nach einem der Ansprüche 1 bis 9, dadurch gekennzeichnet, daß der schraubenlinienförmige Permeationskanal (21) an einen sich in der Außenfläche des Außenbauteiles (4) axial erstreckenden, mit der hinteren Querbohrung (23) in Verbindung stehenden, nutförmigen Führungskanal (22) anschließt.

**Claims**

1. Probe device (1) for sampling volatile components from liquids or gases, e. g., for concentration determination, comprising a probe body (2) consisting of essentially tubular, coaxial parts (3, 4), which are inserted into one another, and a tubular permeation membrane (19) covering a permeation duct (21) extending, for example helically, on the outside of the body for a carrier-medium intended to carry the actual volatile component, wherein a carrier-medium feed duct (7) leading to the permeation duct (21) is provided between two essentially tubular parts (3, 4) and a carrier-medium return line (32) form the permeation duct (21) is provided inside the probe body (2), and the probe body (2) has a holding space (27) inside, into which a sensor (28) can be or is inserted, characterized in that the probe body (2) consists of only two essentially tubular parts (3, 4), an internal part (3) and an external part (4) which is closed at its front end, and the external part (4) has the permeation duct (21) in its external surface in the front zone (13) adjacent to the front end, said permeation duct being connected with the carrier-medium feed duct (7) between the two parts (3, 4) via a rear cross hole (23) in the external part (4) on one hand, and with the carrier-medium return line (32) via a front hole (24) in the external part (4) near ist front end on the other hand.

2. Probe device in accordance with claim 1, characterized in that the front end of the external part (4) is closed off by a plug-like closing member (18).

3. Probe device in accordance with claim 2, characterized in that a cross hole (25) aligned with the front cross hole (24) in the external part (4) and an axial blind hole (26) aligned with the said cross hole are provided in the closing member (18) to return the carrier-medium.

4. Probe device in accordance with any one of claims 1 to 3, characterized in that the external part (4) carries a peripheral seal (14) such as an O-Ring, in the zone (12) in which the probe body (2) is fixed in a housing, socket or the like (15).

5. Probe device in accordance with any one of claims 2 to 4, characterized in that the holding space (27) for the sensor (28) or for an adapter connected with an external measuring instrument, is provided between the back side of the closing member (18) and the front end of the internal part (3).

6. Probe device in accordance with any one of claims 1 to 4, characterized in that the external part (4) carries a coaxial protective sleeve (34) surrounding its front zone (13) in which the permeation membrane (19) is disposed in spaced relationship.

7. Probe device in accordance with claim 6, characterized in that the rear end of the protective sleeve (34) is screwed onto a threaded section of reduced diameter of the external part (4).

8. Probe device in accordance with claim 6 or 7, characterized in that the protective sleeve (34) is perforated.

9. Probe device in accordance with any one of claims 6 to 8, characterized in that the outside of the protective sleeve (34) is aligned with the outside of the external part (34) in its adjoining zone (12) of attachment to a housing, socket or the like (15).

10. Probe device in accordance with any one of claims 1 to 9, characterized in that the helical permeation duct (21) joins a flute-shaped guide duct (22) which extends axially in the external surface of the external part (4) and is in communication with the rear cross hole (23).

## Revendications

1. Sonde (1) de prélèvement de composants volatils dans des liquides ou des gaz, par exemple pour la détermination de leur concentration, comportant un corps de sonde (2) constitué de deux éléments coaxiaux (3, 4) sensiblement tubulaires emmanchés l'un dans l'autre et un canal de perméation (21) s'étendant du côté extérieur, par exemple en forme d'hélice, recouvert par une membrane de perméation (19) en forme de tuyau souple et prévu pour un agent porteur entraînant les divers composants volatils, un canal d'alimentation en agent porteur (7) étant prévu vers le canal de perméation (21) entre les deux éléments sensiblement tubulaires (3, 4) ainsi qu'une conduite de retour d'agent porteur (32) qui part du conduit de perméation (21) et passe à l'intérieur du corps de sonde (2), le corps de sonde (2) comportant à l'intérieur un logement de réception (27) dans lequel un capteur (28) peut être inséré ou enfoncé, caractérisée en ce que le corps de sonde (2) se compose simplement des deux éléments sensiblement tubulaires (3, 4), c'est-à-dire d'un élément intérieur (3) et d'un élément extérieur (4) fermé du côté frontal antérieur, l'élément extérieur (4) présentant, dans sa partie avant (13) voisine du côté frontal antérieur, le canal de perméation (21) sur sa surface extérieure, ce canal étant en liaison, d'une part avec le canal d'alimentation en agent porteur (7) situé entre les deux élément (3, 4) par un orifice transversal arrière (23) de l'élément extérieur (4) et, d'autre part, avec la conduite de retour d'agent porteur (32) par un orifice avant (24) de l'élément extérieur (4) situé à proximité du côté frontal antérieur de cet élément.

2. Sonde selon la revendication 1, caractérisée en ce que l'élément extérieur (4) est fermé du côté frontal antérieur par une pièce de fermeture en forme de bouchon (18).

3. Sonde selon la revendication 2, caractérisée en ce que pour le retour de l'agent porteur, il est prévu dans la pièce de fermeture (18) un alésage transversal (25) situé en face de l'orifice transversal avant (24) de l'élément extérieur (4) et un alésage borgne (26) orienté en direction axiale à partir du précédent.

4. Sonde selon l'une des revendications 1 à 3, caractérisée en ce que l'élément extérieur (4) porte, dans la zone (12) de fixation du corps de sonde (2) dans un carter, une tubulure ou similaire (15), un joint d'étanchéité périphérique (14) tel qu'un joint torique.

5. Sonde selon l'une des revendications 2 à 4, caractérisée en ce qu'entre la face arrière de la pièce de fermeture (18) et la face frontale antérieure de l'élément intérieur (3), est prévu le logement de réception (27) pour le capteur (28) ou pour un adaptateur relié à un appareil de mesure extérieur.

6. Sonde selon l'une des revendications 1 à 4, caractérisée en ce que l'élément extérieur (4) porte un manchon de protection coaxial (34) entourant à distance sa partie avant (13) dans laquelle est disposée la membrane de perméation (19).

7. Sonde selon la revendication 6, caractérisée en ce que le manchon de protection (34) est vissé par son extrémité arrière sur une partie filetée en saillie de l'élément extérieur (4).

8. Sonde selon la revendication 6 ou 7, caractérisée en ce que le manchon de protection (34) est perforé.

9. Sonde selon l'une des revendications 6 à 8, caractérisée en ce que la surface extérieur du manchon de protection (34) est au niveau de la surface extérieure de l'élément extérieur (4) dans la zone (12) de cet élément qui lui fait suite et qui sert à la fixation dans un carter, une tubulure ou similaire (15).

10. Sonde selon l'une des revendications 1 à 9, caractérisée en ce que le canal de perméation hélicoïdal (21) se raccorde à un canal de guidage (22) en forme de rainure s'étendant en direction axiale dans la surface extérieure de l'élément extérieur (4) et qui est en liaison avec l'orifice transversal arrière (23).